# EUROPEAN PATENT SPECIFICATION

(11) **EP 4 250 199 B1**
(45) Date of publication and mention of the grant of the patent: **17.06.2026**
(21) Application number: 20962499.8
(22) Date of filing: 20.11.2020
(51) Int. Cl.: G06Q 10/0833, G06Q 10/0639, G06Q 10/08, G06Q 10/101, G06Q 10/10, G06Q 30/018, G06Q 50/04, G06Q 50/26, G06Q 50/18

(54) **INFORMATION PROCESSING PROGRAM, INFORMATION PROCESSING METHOD, AND INFORMATION PROCESSING DEVICE**
INFORMATIONSVERARBEITUNGSPROGRAMM, INFORMATIONSVERARBEITUNGSVERFAHREN UND INFORMATIONSVERARBEITUNGSVORRICHTUNG
PROGRAMME DE TRAITEMENT D'INFORMATIONS, PROCÉDÉ DE TRAITEMENT D'INFORMATIONS ET DISPOSITIF DE TRAITEMENT D'INFORMATIONS

(43) Date of publication of application: 27.09.2023
(73) Proprietor: FUJITSU LIMITED, Kawasaki-shi, Kanagawa 211-8588 (JP)
(72) Inventor: SATO, Izuru, Kawasaki-shi, Kanagawa 211-8588 (JP); NISHIMAKI, Satoru, Kawasaki-shi, Kanagawa 211-8588 (JP); FUKUI, Masayuki, Kawasaki-shi, Kanagawa 211-8588 (JP); NAKAGAWA, Itaru, Kawasaki-shi, Kanagawa 211-8588 (JP)
(74) Representative: Haseltine Lake Kempner LLP
(86) International application number: PCT/JP2020/043491
(87) International publication number: WO 2022/107337

(56) References cited:
- WO-A1-2018/124297
- JP-A- 2018 173 692
- JP-A- 2019 073 394
- JP-A- 2020 021 134
- JP-A- 2020 046 738
- US-A1- 2019 385 120
- US-A1- 2020 118 068
- ALLISON IRVIN ET AL: "Designing for Privacy and Confidentiality on Distributed Ledgers for Enterprise (Industry Track)", ARXIV.ORG, CORNELL UNIVERSITY LIBRARY, 201 OLIN LIBRARY CORNELL UNIVERSITY ITHACA, NY 14853, 6 December 2019 (2019-12-06), XP081546461
- ANONYMOUS: "Improving Trust of Data Exchange across Industries: Chain Data Lineage", FUJITSU FORUM 2019, 20 May 2019 (2019-05-20), XP009538139

## Description

### FIELD

Embodiments of the present invention relate to an information processing program, an information processing method, and an information processing device.

### BACKGROUND

Conventionally, in distribution fields of manufacturing supply chains, medicine, food, and the like, traceability systems that can verify how a product is manufactured and processed in an open manner using distributed ledgers such as blockchains are known.

### CITATION LIST

### PATENT DOCUMENT

Patent Document 1: Japanese Laid-open Patent Publication No. 2020-46993
Non-Patent Document 1: "Designing for Privacy and Confidentiality on Distributed Ledgers for Enterprise (Industry Track)" (Irvin, A. & Kiral, I., arXiv:1912.02924v1 [cs.CR]) relates to distributed ledger technology and provides a guide to navigate and aid in decisions around common requirements and mechanisms that prevent the leakage of private and confidential information with distributed data and decentralized computation on a shared platform.

### SUMMARY

### [TECHNICAL PROBLEM]

However, the above conventional technology has a problem that some data desired to be kept secret such as transaction data between companies is to be disclosed due to registration in the blockchain.

For example, when transaction data between companies is registered in the blockchain, data such as what transaction has been conducted between companies is also shared in data synchronization of the blockchain. Therefore, there are cases where details of the transaction are leaked to other companies other than the companies that have conducted the transaction.

In one aspect, an object is to provide an information processing program, an information processing method, and an information processing device capable of supporting improvement of confidentiality in a traceability system.

### [SOLUTION TO PROBLEM]

In one proposal, an information processing program causes a computer to execute processing of accepting, processing of registering in a first data management unit, and processing of registering in a second data management unit.

According to an aspect of the embodiments, an information processing program that causes a computer to execute a process is provided. The invention is defined in the independent claims. Specific embodiments are defined in the dependent claims.

### [ADVANTAGEOUS EFFECTS OF INVENTION]

Improvement of confidentiality in a traceability system can be supported.

### BRIEF DESCRIPTION OF DRAWINGS

FIG. 1 is an explanatory diagram for describing an outline of a traceability system according to an embodiment;
FIG. 2 is a block diagram illustrating a functional configuration example of a server device;
FIG. 3A is an explanatory diagram for describing an outline of trail data to be registered in the traceability system according to the embodiment;
FIG. 3B is an explanatory diagram for describing an outline of trail data to be registered in the traceability system according to the embodiment;
FIG. 4 is a flowchart illustrating an operation example of the server device;
FIG. 5A is an explanatory diagram for describing an outline of an operation of the traceability system according to the embodiment;
FIG. 5B is an explanatory diagram for describing the outline of the operation of the traceability system according to the embodiment;
FIG. 6 is a flowchart illustrating an operation example of the server device;
FIG. 7 is an explanatory diagram for describing the outline of the operation of the traceability system according to the embodiment; and
FIG. 8 is an explanatory diagram for describing an example of a computer configuration.

### DESCRIPTION OF EMBODIMENTS

Hereinafter, an information processing program, an information processing method, and an information processing device according to embodiments will be described with reference to the drawings. Configurations having the same functions in the embodiments are denoted by the same reference signs, and redundant description will be omitted. Note that the information processing program, the information processing method, and the information processing device described in the following embodiments are merely examples and do not limit the embodiments. Furthermore, each of the following embodiments may be appropriately combined unless otherwise contradicted.

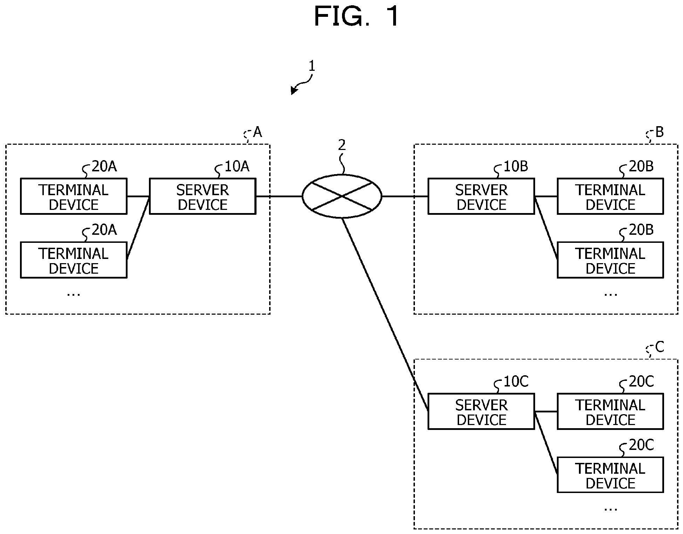

FIG. 1 is an explanatory diagram for describing an outline of a traceability system according to an embodiment. As illustrated in FIG. 1, in a traceability system 1, individual organizations (organizations A, B, C, and the like) such as a producer, a processor, and a distributor related to a manufacturing supply chain, medicine, food, and the like are coupled to be able to communicate in a bidirectional direction via a network 2 such as the Internet.

In the traceability system 1, each organization (organization A, B, C, or the like) registers history information such as transaction details or processing details related to a product (manufactured material) as evidence (trail) data. This trail data includes an identifier such as an identification number indicating previous history information together with an identifier such as an identification number for identifying current history information. Thereby, the traceability system 1 ensures traceability of a history such as the transaction details and the processing details related to the product (manufactured material).

The respective organizations (organizations A, B, C, and the like) of the traceability system 1 include server devices 10A, 10B, 10C, and the like as examples of an information processing device that manages various types of information, and terminal devices 20A, 20B, 20C, and the like such as personal computers (PCs) used by users. Note that the server devices 10A, 10B, 10C, and the like and the terminal devices 20A, 20B, 20C, and the like for the respective organizations will be referred to as the server device(s) 10 and the terminal device(s) 20 unless otherwise distinguished.

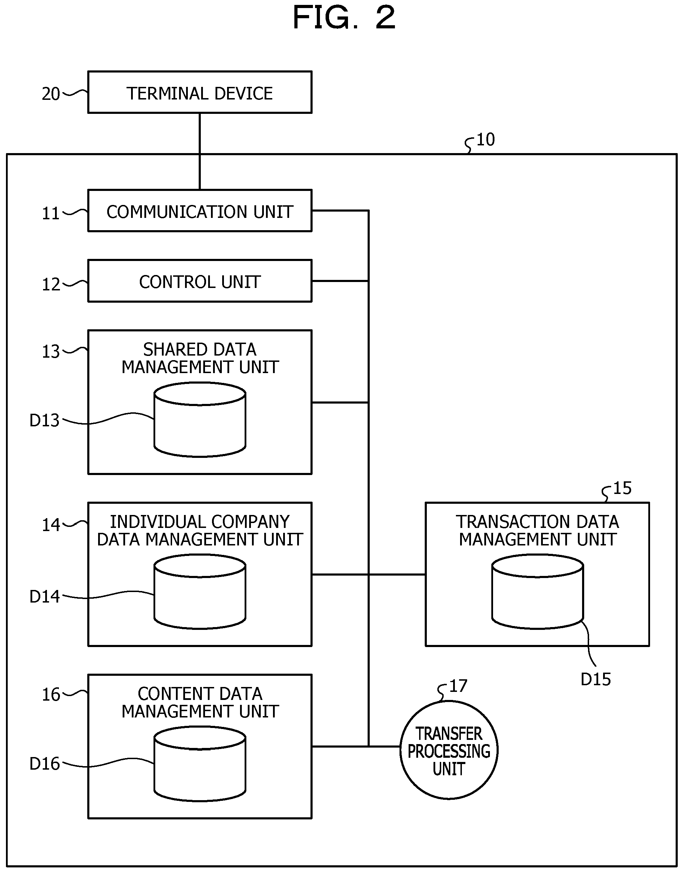

FIG. 2 is a block diagram illustrating a functional configuration example of a server device 10. As illustrated in FIG. 2, the server device 10 includes a communication unit 11, a control unit 12, a shared data management unit 13, an individual company data management unit 14, a transaction data management unit 15, a content data management unit 16, and a transfer processing unit 17.

The communication unit 11 is a processing unit that communicates with other devices (for example, the terminal device 20, the server device 10 of another organization, or the like) via a communication cable or the like under the control of the control unit 12.

For example, the communication unit 11 receives, from the terminal device 20, registration data to be registered as the trail data such as the transaction details and the processing details related to the product (manufactured material). The registration data (trail data) includes the history information such as the transaction details and the processing details, and content data indicating transaction and processing entities (for example, text, video, and the like).

Furthermore, the communication unit 11 transmits a request to the server device 10 of another organization, receives a reply to the transmitted request, and the like. Furthermore, the communication unit 11 performs communication related to data synchronization among organizations in the shared data management unit 13 with the server device 10 of another organization.

The control unit 12 is a processing unit that controls various operations in the server device 10. The control unit 12 may be implemented by a central processing unit (CPU), a micro processing unit (MPU), or the like. Furthermore, the control unit 12 may also be implemented by a hard wired logic such as an application specific integrated circuit (ASIC) or a field programmable gate array (FPGA).

For example, when accepting the trail data to be registered in the traceability system 1 from the terminal device 20 via the communication unit 11, the control unit 12 performs registration processing of registering the accepted trail data. Furthermore, when accepting an identifier related to the trail data to be acquired from the terminal device 20 via the communication unit 11, the control unit 12 performs processing of acquiring the trail data corresponding to the accepted identifier and outputting the trail data to the terminal device 20.

The shared data management unit 13 is a processing unit that manages shared data D13 shared among the organizations (organizations A, B, C, and the like) of the traceability system 1 for the trail data to be registered. Specifically, the shared data management unit 13 shares the shared data D13 among participant organizations (organizations A, B, C, and the like) via a distributed ledger based on a distributed ledger technology such as a blockchain by data synchronization with the server devices 10 among the participant organizations (organizations A, B, C, and the like) via the communication unit 11. As the distributed ledger technology such as the blockchain, for example, Hyperledger Fabric, which is one of open source blockchain platforms, or the like can be applied.

The individual company data management unit 14 is a processing unit that manages individual company data D14 in the organization (individual company) without sharing the data among the organizations (organizations A, B, C, and the like), for the trail data to be registered. As the individual company data management unit 14, for example, a known database such as MongoDB or CouchDB can be applied.

The transaction data management unit 15 is a processing unit that manages transaction data D15 shared between specific organizations (for example, the organization A and the organization B) among the participant organizations (organizations A, B, C, and the like) of the traceability system 1, for the trail data to be registered. Specifically, the transaction data management unit 15 shares the transaction data D15 between the specific organizations (for example, the organizations A and B) set in advance by data synchronization with the server device 10 between the specific organizations via the communication unit 11. Note that a method of sharing the transaction data D15 may be through the distributed ledger by the distributed ledger technology such as the blockchain, similarly to the shared data management unit 13.

The content data management unit 16 is a processing unit that manages content data D16 in the organization (individual company) without sharing the data among the organizations (organizations A, B, C, and the like), similarly to the individual company data management unit 14, for the trail data to be registered. As the content data management unit 16, for example, a known web server (WebDAV or the like) capable of storing and acquiring various types of media data and text data can be applied.

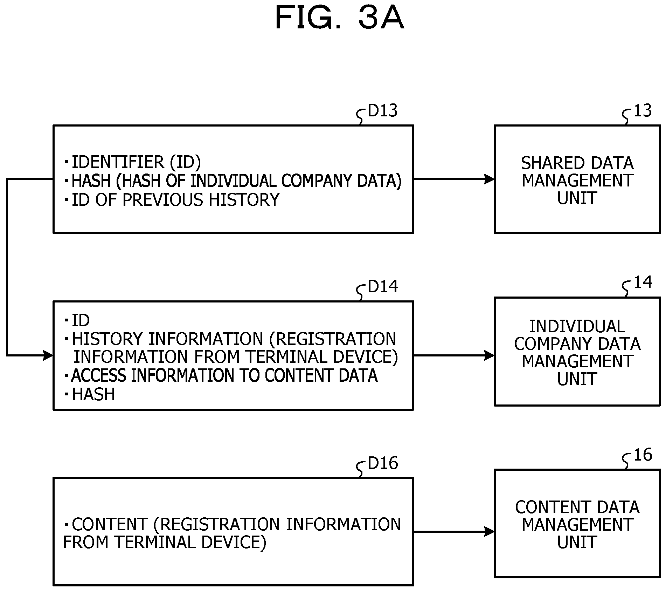

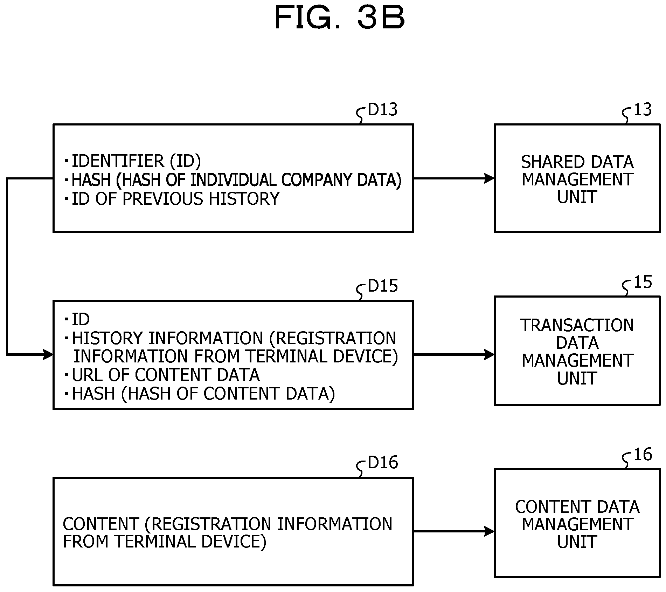

FIGs. 3A and 3B are explanatory diagrams for describing an outline of the trail data to be registered in the traceability system 1 according to the embodiment. Specifically, FIG. 3A is a diagram illustrating a case where the trail data to be registered (history information and content) is separately registered as the shared data D13, the individual company data D14, and the content data D16. Furthermore, FIG. 3B is a diagram illustrating a case where the trail data to be registered (history information and content) is separately registered as the shared data D13, the transaction data D15, and the content data D16.

As illustrated in FIG. 3A, the server device 10 registers the shared data D13 to be shared among the organizations in the shared data management unit 13, registers the individual company data D14 to be managed in the organization in the individual company data management unit 14, and registers the content data D16 related to content in the content data management unit 16, for the trail data to be registered. Furthermore, as illustrated in FIG. 3B, the server device 10 registers, for specific data (the transaction data D15 in the present embodiment) in the trail data to be registered, the shared data D13 to be shared among the organizations in the shared data management unit 13, registers the transaction data D15 to be shared between the specific organizations in the transaction data management unit 15, and registers the content data D16 related to content in the content data management unit 16.

Here, the shared data D13 includes an identifier (ID) corresponding to the trail data, a hash (a hash value of the individual company data D14) that is summary information of details to be registered as the individual company data D14, and an ID of a previous history.

By referring to the shared data D13, the traceability system 1 can track the history such as the transaction details and the processing details related to the product (manufactured material) based on the ID and the ID of the previous history included in the shared data D13. Furthermore, the traceability system 1 can verify the presence or absence of data falsification by comparing the hash included in the shared data D13 with a hash obtained from the individual company data D14.

The individual company data D14 includes the same identifier (ID) as that registered in the shared data D13, the history information (registration information from the terminal device 20), access information to the content data D16, and a hash (a hash value of the content data D16) that is summary information of the content data D16. Note that the access information to the content data D16 is, for example, information (such as a uniform resource locator (URL) of a storage location) indicating a storage location of the content data D16 in the content data management unit 16.

By referring to the individual company data D14, the traceability system 1 can obtain the history information registered as the trail data. Furthermore, the traceability system 1 can access the content data D16 registered as the trail data. Furthermore, the traceability system 1 can verify the presence or absence of data falsification by comparing the hash included in the individual company data D14 with a hash obtained from the content data D16.

The transaction data D15 includes the same identifier (ID) as that registered in the shared data D13, the history information (registration information from the terminal device 20), the access information (URL) to the content data D16, and the hash (the hash value of the content data D16) that is the summary information of the content data D16.

By referring to the transaction data D15, the traceability system 1 can obtain the history information of the specific data (for example, the transaction details between the specific organizations, or the like) in the trail data. Furthermore, the traceability system 1 can access the content data D16 registered as the entity of the specific data. Furthermore, the traceability system 1 can verify the presence or absence of data falsification by comparing the hash included in the transaction data D15 with the hash obtained from the content data D16.

The content data D16 is data indicating content (registration information from the terminal device 20) such as video and text related to the transaction details, the processing details, and the like.

The transfer processing unit 17 is a processing unit that performs processing related to transfer of various types of data under the control of the control unit 12.

For example, when accepting an access request to data with a designated identifier from the terminal device 20, the transfer processing unit 17 specifies the organization as a management source of the data based on the identifier. Specifically, in a case where the identifier has a configuration of an organization name + an identification number, or the like, the transfer processing unit 17 specifies the organization as the management source of the data from the organization name included in the identifier. Furthermore, in a case where the identifier does not include the organization name or the like, the transfer processing unit 17 specifies the organization by transmitting the identifier to the respective server devices 10 of the participant organizations (organizations A, B, C, and the like) and inquiring whether the participant organizations are the management source of information corresponding to the identifier. Next, the transfer processing unit 17 transfers the access request to the server device 10 of the specified management source organization, and transfers a reply in response to the access request to the terminal device 20.

Furthermore, in a case of accepting the access request to data managed in the organization in the individual company data management unit 14, the transaction data management unit 15, or the content data management unit 16 from the server device 10 of another organization, the transfer processing unit 17 reads the requested data from the individual company data management unit 14, the transaction data management unit 15, or the content data management unit 16, and transfers the data to a request source via the communication unit 11. At this time, the transfer processing unit 17 may verify the presence or absence of an access right set for each organization with reference to a preset access control list (ACL), and transfer the data to the request source according to the verification result. For example, in a case where the request source organization has the access right to data, the transfer processing unit 17 transfers the data to the request source. In a case where the request source organization does not have the access right, the transfer processing unit 17 returns an error to the request source.

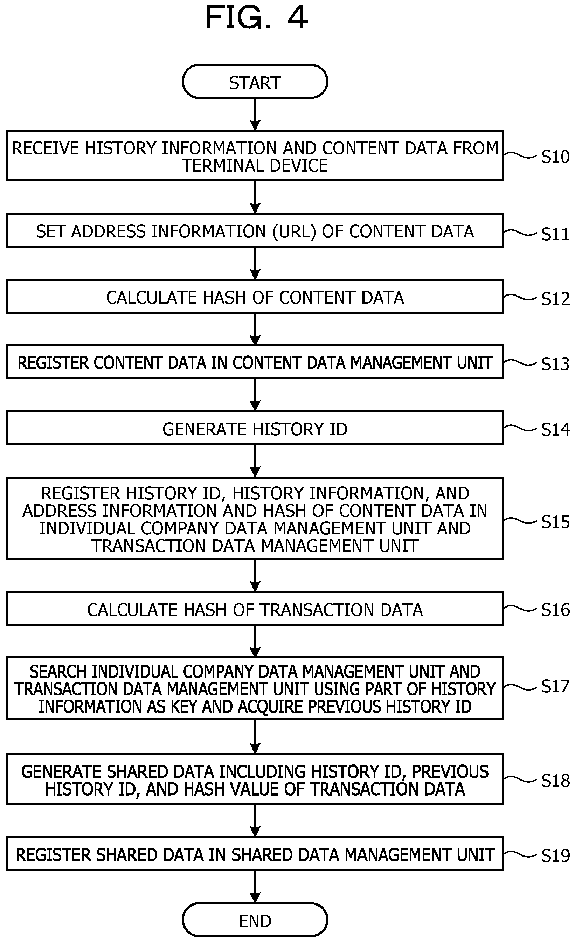

Next, details of the operation of the server device 10 regarding registration of the trail data to be registered will be described. FIG. 4 is a flowchart illustrating an operation example of the server device.

As illustrated in FIG. 4, when the processing is started, the communication unit 11 receives the history information and the content data D16 regarding the trail data to be registered from the terminal device 20 (S10). The communication unit 11 passes the received data to the control unit 12.

Next, the control unit 12 sets address information (URL) of the content data D16 of when storing the content data D16 in the content data management unit 16 (S11), and calculates the hash value of the content data D16 (S12).

Next, the control unit 12 registers the content data D16 in the content data management unit 16 (S13), and generates a history ID as the identifier regarding the trail data to be registered (S14).

Next, the control unit 12 registers the history ID, the history information, and the address information and the hash value of the content data D16 in the individual company data management unit 14 and the transaction data management unit 15 (S15). Specifically, the control unit 12 determines a type of the history information by referring to a preset item table or the like. Next, in a case where the type of the history information is one managed in the organization (for example, information of items (a manufacturing process and the like) that are not shared between the specific organizations), the control unit 12 registers the history information as the individual company data D14 in the individual company data management unit 14. Furthermore, in a case where the type of the history information is one shared between the specific organizations (for example, information of an item shared between the specific organizations (the transaction details between the specific organizations)), the control unit 12 registers the history information as the transaction data D15 in the transaction data management unit 15.

Next, the control unit 12 calculates the hash value of the transaction data D15 (the individual company data D14 in the case of performing the registration to the individual company data management unit 14) (S16). Next, the control unit 12 searches the individual company data management unit 14 and the transaction data management unit 15 using part of the history information as a key, and obtains the history information corresponding to the transaction details and the processing details that are at a preceding stage with respect to the transaction details and the processing details in the trail data to be registered. Thereby, the control unit 12 acquires the history ID of the history information at the preceding stage (S17).

Next, the control unit 12 generates the shared data D13 including the history ID, the history ID of the preceding stage, and the hash value of the transaction data D15 (the individual company data D14 in the case of performing the registration to the individual company data management unit 14) (S18). Next, the control unit 12 registers the generated shared data D13 in the shared data management unit 13 (S19), and terminates the processing.

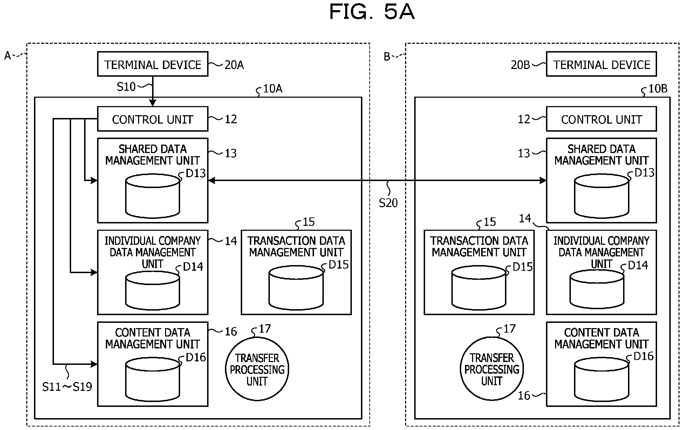

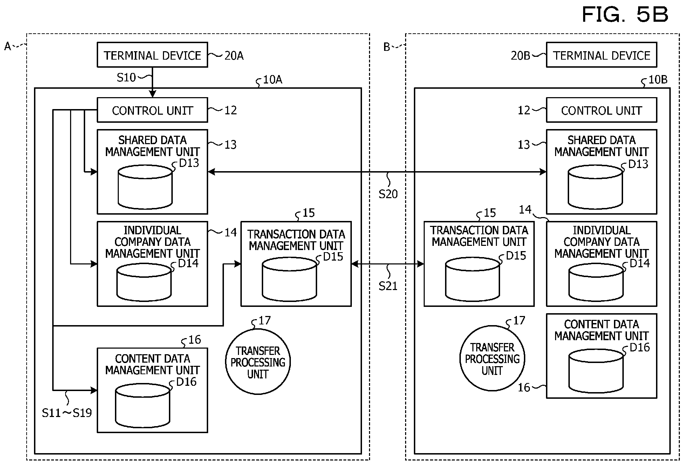

FIGs. 5A and 5B are explanatory diagrams for describing an outline of an operation of the traceability system according to the embodiment. In the example of FIG. 5A, in S10, it is assumed that the terminal device 20A of the organization A has registered the trail data (information of the items to be registered as the individual company data D14 in the individual company data management unit 14) in the server device 10A. The server device 10A of the organization A performs the registration processing of registering the accepted trail data (S11 to S19).

Thereby, the shared data D13 including the history ID, the history ID of the preceding stage, and the hash value of the individual company data D14 is registered in the shared data management unit 13. Furthermore, the individual company data D14 including the history ID, the address information of the content data D16, the history information, and the hash value of the content data D16 is registered in the individual company data management unit 14. Furthermore, the content data D16 is registered in the content data management unit 16.

The shared data management unit 13 of the server device 10A shares the shared data D13 among the participant organizations via the distributed ledger by data synchronization with the server devices 10 among the participant organizations (organizations A, B, C, and the like) (S20). Thereby, for example, the shared data D13 in the shared data management unit 13 of the server device 10A and the shared data D13 in the shared data management unit 13 of the server device 10B become the same data.

In the example of FIG. 5B, in S10, it is assumed that the terminal device 20A of the organization A has registered the trail data (information of the items to be registered as the transaction data D15 in the transaction data management unit 15) in the server device 10A. The server device 10A of the organization A performs the registration processing of registering the accepted trail data (S11 to S19).

Thereby, the shared data D13 including the history ID, the history ID of the preceding stage, and the hash value of the transaction data D15 is registered in the shared data management unit 13. Furthermore, the transaction data D15 including the history ID, the address information of the content data D16, the history information, and the hash value of the content data D16 is registered in the transaction data management unit 15. Furthermore, the content data D16 is registered in the content data management unit 16.

The shared data management unit 13 of the server device 10A shares the shared data D13 among the participant organizations via the distributed ledger by data synchronization with the server devices 10 among the participant organizations (organizations A, B, C, and the like) (S20). Furthermore, the transaction data management unit 15 of the server device 10A shares the transaction data D15 between the specific organizations via the distributed ledger by data synchronization with the server devices 10 between the specific organizations (organizations A and B in the illustrated example) (S21). Thereby, for example, the transaction data D15 in the transaction data management unit 15 of the server device 10A and the transaction data D15 in the transaction data management unit 15 of the server device 10B become the same data.

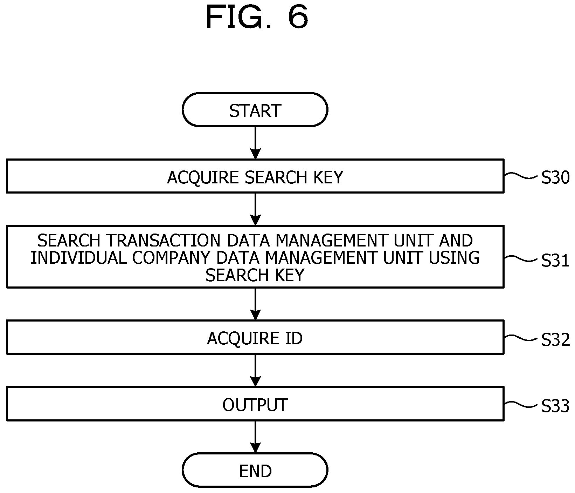

Next, an example of the operation of the server device 10 when acquiring data registered in the traceability system 1 from the terminal device 20 will be described. FIG. 6 is a flowchart illustrating an operation example of the server device 10. Specifically, FIG. 6 is a flowchart illustrating an operation example of the server device 10 in a case of accepting search target information (search key) to be searched from the terminal device 20 and outputting the trail data (the identifier of the trail data in the present embodiment) corresponding to the search key to the terminal device 20.

As illustrated in FIG. 6, when the processing is started, the control unit 12 acquires the search key from the terminal device 20 via the communication unit 11 (S30). The search key only needs to be information for specifying the transaction details and the processing details, and may be, for example, a combination of various conditions such as an identifier, transaction (processing) date and time, the number of transactions (processes), and a business partner.

Next, the control unit 12 searches the transaction data management unit 15 and the individual company data management unit 14 with the search key (S31), and specifies the transaction data D15 and the individual company data D14 corresponding to the search key. Next, the control unit 12 acquires the identifier (ID) corresponding to the specified transaction data D15 and individual company data D14 (S32), and outputs the acquired identifier to the terminal device 20 via the communication unit 11 (S33).

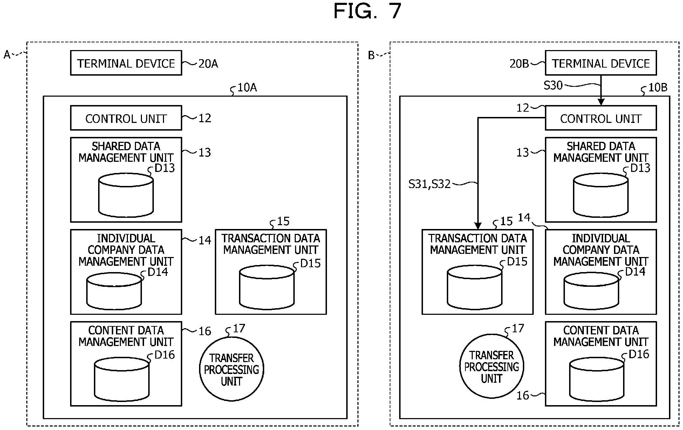

FIG. 7 is an explanatory diagram for describing the outline of the operation of the traceability system according to the embodiment. In the example of FIG. 7, in S30, it is assumed that the terminal device 20B of the organization B has requested the server device 10B to perform the search using the search key.

The server device 10B acquires, for example, the transaction data D15 corresponding to the search key from the transaction data management unit 15 and outputs the transaction data D15 to the terminal device 20B based on the search request. Thereby, a user can specify the trail data (transaction data D15) corresponding to the search key.

Note that the terminal device 20B may acquire the shared data D13 having the same ID from the server device 10B for the transaction data D15 acquired from the server device 10B, and verify data consistency by comparing the hash value of the shared data D13 with the hash value calculated from the transaction data D15. Similarly, the terminal device 20B may verify the data consistency by comparing the hash value included in the transaction data D15 acquired from the server device 10B with the hash value of the content data D16 acquired from the address information of the transaction data D15.

As described above, the server device 10 accepts the trail data to be registered in the traceability system 1. The server device 10 registers the identifier corresponding to the accepted trail data in the shared data management unit 13 that is shared and managed among the organizations of the traceability system 1. The server device 10 registers information regarding the specific data included in the accepted trail data together with the identifier in the transaction data management unit 15 that is shared and managed between the specific organizations of the traceability system 1.

Thereby, in the traceability system 1, the information regarding the specific data included in the trail data to be registered is registered together with the identifier in the transaction data management unit 15 that is shared and managed between the specific organizations. Therefore, the information regarding the specific data can be suppressed from being shared by organizations other than the specific organizations. As described above, the traceability system 1 can suppress leakage of information regarding the specific data to other organizations other than the specific organizations and can improve confidentiality.

Furthermore, the server device 10 registers the specific data included in the accepted trail data in the content data management unit 16, and registers the information indicating an access location to the specific data registered in the content data management unit 16, together with the identifier corresponding to the trail data in the transaction data management unit 15. Thereby, the traceability system 1 can access the specific data registered in the content data management unit 16 based on the information indicating the access location registered in the transaction data management unit 15.

Furthermore, the server device 10 registers the summary information of the specific data registered in the content data management unit 16 together with the identifier corresponding to the trail data in the transaction data management unit 15. Thereby, the traceability system 1 can verify the specific data registered in the content data management unit 16 based on the summary information registered in the transaction data management unit 15.

Furthermore, the transaction data management unit 15 of the server device 10 shares data between the specific organizations via the distributed ledger between the specific organizations of the traceability system 1. Thereby, in the traceability system 1, the information regarding the specific data can be shared between the specific organizations together with the identifier via the distributed ledger.

Furthermore, the specific data included in the accepted trail data is the transaction data related to the transaction between the specific organizations. Thereby, the traceability system 1 can conceal the transaction data regarding the transaction between the specific organizations from other organizations other than the specific organizations.

Furthermore, the server device 10 accepts the search target information to be searched. Next, the server device 10 searches for the data registered in the transaction data management unit 15 based on the accepted search target information, and acquires the identifier related to data corresponding to the search target information. Next, the server device 10 outputs the acquired identifier. Thereby, the traceability system 1 can obtain the identifier of the trail data corresponding to the search target information based on the search target information to be searched.

Note that each of the illustrated components in each of the devices does not necessarily have to be physically configured as illustrated in the drawings. In other words, specific modes of distribution and integration of the respective devices are not limited to those illustrated, and all or a part of the respective devices may be configured by being functionally or physically distributed and integrated in an optional unit depending on various loads, use situations, and the like.

Furthermore, all or an optional part of the various processing functions of the communication unit 11, the control unit 12, the shared data management unit 13, the individual company data management unit 14, the transaction data management unit 15, the content data management unit 16, and the transfer processing unit 17 of the server device 10 may be executed on a CPU (or a microcomputer such as an MPU or a micro controller unit (MCU)). Furthermore, it is needless to say that all or an optional part of various processing functions may be executed on a program analyzed and executed by a CPU (or a microcomputer such as an MPU or an MCU) or on hardware by wired logic. Furthermore, various processing functions performed by the server device 10 may be executed by a plurality of computers in cooperation through cloud computing.

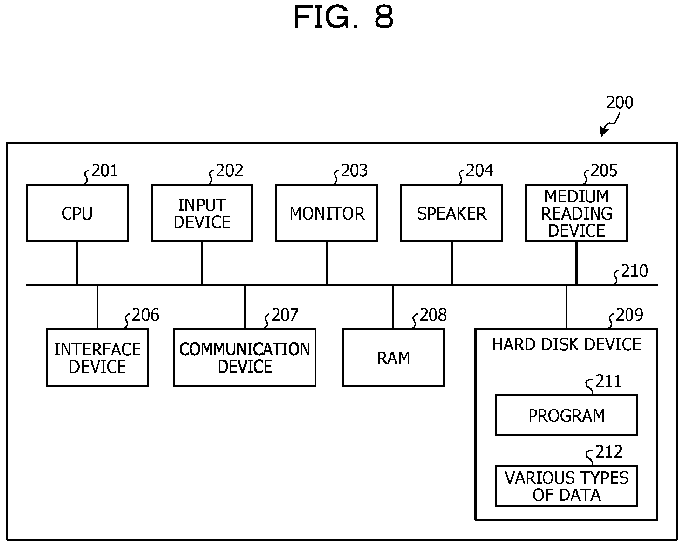

Meanwhile, various types of processing described in the above embodiments described above may be implemented by executing a program prepared beforehand on a computer. Thus, hereinafter, an example of a computer configuration (hardware) that executes a program having functions similar to the functions of the above embodiments will be described. FIG. 8 is an explanatory diagram for describing an example of a computer configuration.

As illustrated in FIG. 8, a computer 200 includes a CPU 201 that executes various types of arithmetic processing, an input device 202 that receives data input, a monitor 203, and a speaker 204. Furthermore, the computer 200 includes a medium reading device 205 that reads a program or the like from a storage medium, an interface device 206 to be coupled to various devices, and a communication device 207 to be coupled to and communicate with an external device in a wired or wireless manner. Furthermore, the computer 200 includes a random access memory (RAM) 208 that temporarily stores various types of information, and a hard disk device 209. Furthermore, each of the units (201 to 209) in the computer 200 is coupled to a bus 210.

The hard disk device 209 stores a program 211 for executing various types of processing in the functional configurations (for example, the communication unit 11, the control unit 12, the shared data management unit 13, the individual company data management unit 14, the transaction data management unit 15, the content data management unit 16, and the transfer processing unit 17) described in the above embodiment. Furthermore, the hard disk device 209 stores various types of data 212 that the program 211 refers to. The input device 202 receives, for example, an input of operation information from an operator. The monitor 203 displays, for example, various screens operated by the operator. The interface device 206 is coupled to, for example, a printing device or the like. The communication device 207 is coupled to a communication network such as a local area network (LAN), and exchanges various types of information with an external device via the communication network.

The CPU 201 reads the program 211 stored in the hard disk device 209, expands the program in the RAM 208, and executes the program, thereby performing the various types of processing related to the above functional configurations (for example, the communication unit 11, the control unit 12, the shared data management unit 13, the individual company data management unit 14, the transaction data management unit 15, the content data management unit 16, and the transfer processing unit 17). Note that the program 211 does not have to be stored in the hard disk device 209. For example, the program 211 stored in a storage medium readable by the computer 200 may be read and executed. For example, the storage medium readable by the computer 200 corresponds to a portable recording medium such as a compact disc read-only memory (CD-ROM), a digital versatile disc (DVD), or a universal serial bus (USB) memory, a semiconductor memory such as a flash memory, a hard disk drive, or the like. Furthermore, the program 211 may be stored in a device coupled to a public line, the Internet, a LAN, or the like, and the computer 200 may read the program 211 from the device to execute the program 211.

### REFERENCE SIGNS LIST

- 1: Traceability system
- 2: Network
- 10, 10A to 10C: Server device
- 11: Communication unit
- 12: Control unit
- 13: Shared data management unit
- 14: Individual company data management unit
- 15: Transaction data management unit
- 16: Content data management unit
- 17: Transfer processing unit
- 20, 20A to 20C: Terminal device
- 200: Computer
- 201: CPU
- 202: Input device
- 203: Monitor
- 204: Speaker
- 205: Medium reading device
- 206: Interface device
- 207: Communication device
- 208: RAM
- 209: Hard disk device
- 210: Bus
- 211: Program
- 212: Various types of data
- A to C: Organization
- D13: Shared data
- D14: Individual company data
- D15: Transaction data
- D16: Content data

## Claims

1. An information processing program that causes a computer to execute a process, the process comprising:
acquiring first trail data including history information, which includes transaction details or processing details related to a product, and content data, which is a target for transaction and processing, and to be registered in a traceability system;
**characterised by**:
registering a first identifier that corresponds to the first trail data, a first hash value, which is summary information of individual company data, and a previous identifier of previous history information in a first memory (13) to which organizations of the traceability system refer;
registering the first identifier, the history information, access information to the content data, and a second hash value, which is summary information of the content data, in a second memory (15) to which certain organizations of the organizations refer; and
in a case of accepting an access request to data managed in an organization in an individual company:
reading data from the first memory (13) or the second memory (15),
verifying presence or absence of an access right set for each organization with reference to a preset access control list,
transferring the data to a request source organization in a case where the request source organization has the access right to the data and,
returning an error to the request source organization in a case where the request source organization does not have the access right to the data.

2. The information processing program according to claim 1, wherein the process further comprises:
registering the content data in a third memory (16); and
registering information that indicates an access location to the content data registered in the third memory (16) in the second memory (15).

3. The information processing program according to claim 1, wherein
the second memory (15) is referred to by the certain organizations via a distributed ledger for between the certain organizations.

4. The information processing program according to claim 1, wherein
the content data is transaction data related to a transaction between the certain organizations.

5. The information processing program according to claim 1, wherein the process further comprises:
acquiring search target information;
searching for data registered in the second memory (15) based on the search target information;
acquiring an identifier related to data that corresponds to the search target information; and
outputting the acquired identifier.

6. An information processing method for a computer to execute a process comprising:
acquiring first trail data including history information, which includes transaction details or processing details related to a product, and content data, which is a target for transaction and processing, and to be registered in a traceability system;
**characterised by**:
registering a first identifier that corresponds to the first trail data, a first hash value, which is summary information of individual company data, and a previous identifier of previous history information in a first memory (13) to which organizations of the traceability system refer;
registering the first identifier, the history information, access information to the content data, and a second hash value, which is summary information of the content data, in a second memory (15) to which certain organizations of the organizations refer; and
in a case of accepting an access request to data managed in an organization in an individual company:
reading data from the first memory (13) or the second memory (15),
verifying presence or absence of an access right set for each organization with reference to a preset access control list,
transferring the data to a request source organization in a case where the request source organization has the access right to the data and,
returning an error to the request source organization in a case where the request source organization does not have the access right to the data.

7. The information processing method according to claim 6, wherein the process further comprises:
registering the content data in a third memory (16); and
registering information that indicates an access location to the content data registered in the third memory (16) in the second memory (15).

8. The information processing method according to claim 6, wherein
the second memory (15) is referred to by the certain organizations via a distributed ledger for between the certain organizations.

9. The information processing method according to claim 6, wherein
the content data is transaction data related to a transaction between the certain organizations.

10. The information processing method according to claim 6, wherein the process further comprises:
acquiring search target information;
searching for data registered in the second memory (15) based on the search target information;
acquiring an identifier related to data that corresponds to the search target information; and
outputting the acquired identifier.

11. An information processing device comprising:
a control unit configured to:
acquire first trail data including history information, which includes transaction details or processing details related to a product, and content data, which is a target for transaction and processing, and to be registered in a traceability system;
the device being **characterised in that** the control unit is configured to:
register a first identifier that corresponds to the first trail data, a first hash value, which is summary information of individual company data, and a previous identifier of previous history information in a first memory (13) to which organizations of the traceability system refer;
register the first identifier, the history information, access information to the content data, and a second hash value, which is summary information of the content data, in a second memory (15) to which certain organizations of the organizations refer; and
in a case of accepting an access request to data managed in an organization in an individual company:
read data from the first memory (13) or the second memory (15),
verify presence or absence of an access right set for each organization with reference to a preset access control list,
transfer the data to a request source organization in a case where the request source organization has the access right to the data and,
return an error to the request source organization in a case where the request source organization does not have the access right to the data.

12. The information processing device according to claim 11, wherein the control unit is further configured to:
register the content data in a third memory (16);
register information that indicates an access location to the content data registered in the third memory (16) in the second memory (15).

13. The information processing device according to claim 11, wherein
the second memory (15) is referred to by the certain organizations via a distributed ledger for between the certain organizations.

14. The information processing device according to claim 11, wherein
the content data is transaction data related to a transaction between the certain organizations.

15. The information processing device according to claim 11, wherein the control unit is further configured to:
acquire search target information;
search for data registered in the second memory (15) based on the search target information;
acquire an identifier related to data that corresponds to the search target information; and
output the acquired identifier.

## Patentansprüche

1. Informationsverarbeitungsprogramm, das einen Computer veranlasst, einen Prozess auszuführen, wobei der Prozess umfasst:
Erfassen erster Verfolgungsdaten, beinhaltend Verlaufsinformationen, die Transaktionsdetails oder Verarbeitungsdetails in Bezug auf ein Produkt beinhalten, und Inhaltsdaten, die ein Gegenstand für Transaktion und Verarbeitung sind und in einem Rückverfolgbarkeitssystem zu registrieren sind;
**dadurch gekennzeichnet, dass**:
Registrieren einer ersten Kennung, die den ersten Verfolgungsdaten entspricht, eines ersten Hashwerts, der Zusammenfassungsinformationen von Einzelunternehmensdaten ist, und einer vorherigen Kennung vorheriger Verlaufsinformationen in einem ersten Speicher (13), auf den Organisationen des Rückverfolgbarkeitssystems verweisen;
Registrieren der ersten Kennung, der Verlaufsinformationen, von Zugriffsinformationen auf die Inhaltsdaten und eines zweiten Hashwerts, der Zusammenfassungsinformationen der Inhaltsdaten ist, in einem zweiten Speicher (15), auf den bestimmte Organisationen der Organisationen verweisen; und
in einem Fall des Annehmens einer Zugriffsanfrage auf Daten, die in einer Organisation in einem Einzelunternehmen verwaltet werden:
Lesen von Daten aus dem ersten Speicher (13) oder dem zweiten Speicher (15),
Überprüfen des Vorhandenseins oder Nichtvorhandenseins eines Zugriffsrechts, das für jede Organisation festgelegt ist, unter Bezugnahme auf eine voreingestellte Zugriffskontrollliste,
Übertragen der Daten an eine Anfragequellorganisation in einem Fall, in dem die Anfragequellorganisation das Zugriffsrecht auf die Daten aufweist, und,
Zurückgeben eines Fehlers an die Anfragequellorganisation in einem Fall, in dem die Anfragequellorganisation das Zugriffsrecht auf die Daten nicht aufweist.

2. Informationsverarbeitungsprogramm nach Anspruch 1, wobei der Prozess ferner umfasst:
Registrieren der Inhaltsdaten in einem dritten Speicher (16); und
Registrieren von Informationen, die einen Zugriffsort auf die in dem dritten Speicher (16) registrierten Inhaltsdaten angeben, in dem zweiten Speicher (15).

3. Informationsverarbeitungsprogramm nach Anspruch 1, wobei auf den zweiten Speicher (15) durch die bestimmten Organisationen über ein verteiltes Ledger für zwischen den bestimmten Organisationen verwiesen wird.

4. Informationsverarbeitungsprogramm nach Anspruch 1, wobei die Inhaltsdaten Transaktionsdaten in Bezug auf eine Transaktion zwischen den bestimmten Organisationen sind.

5. Informationsverarbeitungsprogramm nach Anspruch 1, wobei der Prozess ferner umfasst:
Erfassen von Suchzielinformationen;
Suchen nach Daten, die in dem zweiten Speicher (15) registriert sind, basierend auf den Suchzielinformationen;
Erfassen einer Kennung in Bezug auf Daten, die den Suchzielinformationen entsprechen; und
Ausgeben der erfassten Kennung.

6. Informationsverarbeitungsverfahren für einen Computer zum Ausführen eines Prozesses, umfassend:
Erfassen erster Verfolgungsdaten, beinhaltend Verlaufsinformationen, die Transaktionsdetails oder Verarbeitungsdetails in Bezug auf ein Produkt beinhalten, und Inhaltsdaten, die ein Gegenstand für Transaktion und Verarbeitung sind und in einem Rückverfolgbarkeitssystem zu registrieren sind;
**dadurch gekennzeichnet, dass**:
Registrieren einer ersten Kennung, die den ersten Verfolgungsdaten entspricht, eines ersten Hashwerts, der Zusammenfassungsinformationen von Einzelunternehmensdaten ist, und einer vorherigen Kennung vorheriger Verlaufsinformationen in einem ersten Speicher (13), auf den Organisationen des Rückverfolgbarkeitssystems verweisen;
Registrieren der ersten Kennung, der Verlaufsinformationen, von Zugriffsinformationen auf die Inhaltsdaten und eines zweiten Hashwerts, der Zusammenfassungsinformationen der Inhaltsdaten ist, in einem zweiten Speicher (15), auf den bestimmte Organisationen der Organisationen verweisen; und
in einem Fall des Annehmens einer Zugriffsanfrage auf Daten, die in einer Organisation in einem Einzelunternehmen verwaltet werden:
Lesen von Daten aus dem ersten Speicher (13) oder dem zweiten Speicher (15),
Überprüfen des Vorhandenseins oder Nichtvorhandenseins eines Zugriffsrechts, das für jede Organisation festgelegt ist, unter Bezugnahme auf eine voreingestellte Zugriffskontrollliste,
Übertragen der Daten an eine Anfragequellorganisation in einem Fall, in dem die Anfragequellorganisation das Zugriffsrecht auf die Daten aufweist, und,
Zurückgeben eines Fehlers an die Anfragequellorganisation in einem Fall, in dem die Anfragequellorganisation das Zugriffsrecht auf die Daten nicht aufweist.

7. Informationsverarbeitungsverfahren nach Anspruch 6, wobei der Prozess ferner umfasst:
Registrieren der Inhaltsdaten in einem dritten Speicher (16); und
Registrieren von Informationen, die einen Zugriffsort auf die in dem dritten Speicher (16) registrierten Inhaltsdaten angeben, in dem zweiten Speicher (15).

8. Informationsverarbeitungsverfahren nach Anspruch 6, wobei auf den zweiten Speicher (15) durch die bestimmten Organisationen über ein verteiltes Ledger für zwischen den bestimmten Organisationen verwiesen wird.

9. Informationsverarbeitungsverfahren nach Anspruch 6, wobei die Inhaltsdaten Transaktionsdaten sind, die sich auf eine Transaktion zwischen den bestimmten Organisationen beziehen.

10. Informationsverarbeitungsverfahren nach Anspruch 6, wobei der Prozess ferner umfasst:
Erfassen von Suchzielinformationen;
Suchen nach in dem zweiten Speicher (15) registrierten Daten basierend auf den Suchzielinformationen;
Erfassen einer Kennung, die sich auf Daten bezieht, die den Suchzielinformationen entsprechen; und
Ausgeben der erfassten Kennung.

11. Informationsverarbeitungsvorrichtung, umfassend:
eine Steuereinheit, die konfiguriert ist zum:
Erfassen von ersten Verfolgungsdaten, die Verlaufsinformationen, welche Transaktionsdetails oder Verarbeitungsdetails bezogen auf ein Produkt beinhalten, und Inhaltsdaten, welche ein Gegenstand für Transaktion und Verarbeitung sind, beinhalten und in einem Rückverfolgbarkeitssystem zu registrieren sind;
wobei die Vorrichtung **dadurch gekennzeichnet ist, dass** die Steuereinheit konfiguriert ist zum:
Registrieren einer ersten Kennung, die den ersten Verfolgungsdaten entspricht, eines ersten Hashwerts, der Zusammenfassungsinformationen von Einzelunternehmensdaten ist, und einer vorherigen Kennung von vorherigen Verlaufsinformationen in einem ersten Speicher (13), auf den Organisationen des Rückverfolgbarkeitssystems verweisen;
Registrieren der ersten Kennung, der Verlaufsinformationen, von Zugriffsinformationen auf die Inhaltsdaten und eines zweiten Hashwerts, der Zusammenfassungsinformationen der Inhaltsdaten ist, in einem zweiten Speicher (15), auf den bestimmte Organisationen der Organisationen verweisen; und
in einem Fall des Annehmens einer Zugriffsanfrage auf Daten, die in einer Organisation in einem Einzelunternehmen verwaltet werden:
Lesen von Daten aus dem ersten Speicher (13) oder dem zweiten Speicher (15),
Verifizieren des Vorhandenseins oder Nichtvorhandenseins eines Zugriffsrechts, das für jede Organisation festgelegt ist, unter Bezugnahme auf eine voreingestellte Zugriffskontrollliste,
Übertragen der Daten an eine Anfragequellorganisation in einem Fall, in dem die Anfragequellorganisation das Zugriffsrecht auf die Daten aufweist, und,
Zurückgeben eines Fehlers an die Anfragequellorganisation in einem Fall, in dem die Anfragequellorganisation das Zugriffsrecht auf die Daten nicht aufweist.

12. Informationsverarbeitungsvorrichtung nach Anspruch 11, wobei die Steuereinheit ferner konfiguriert ist zum:
Registrieren der Inhaltsdaten in einem dritten Speicher (16); Registrieren von Informationen, die einen Zugriffsort auf die in dem dritten Speicher (16) registrierten Inhaltsdaten angeben, in dem zweiten Speicher (15).

13. Informationsverarbeitungsvorrichtung nach Anspruch 11, wobei
auf den zweiten Speicher (15) durch die bestimmten Organisationen über ein verteiltes Ledger für zwischen den bestimmten Organisationen verwiesen wird.

14. Informationsverarbeitungsvorrichtung nach Anspruch 11, wobei
die Inhaltsdaten Transaktionsdaten sind, die sich auf eine Transaktion zwischen den bestimmten Organisationen beziehen.

15. Informationsverarbeitungsvorrichtung nach Anspruch 11, wobei die Steuereinheit ferner konfiguriert ist zum:
Erfassen von Suchzielinformationen;
Suchen nach in dem zweiten Speicher (15) registrierten Daten basierend auf den Suchzielinformationen;
Erfassen einer Kennung, die sich auf Daten bezieht, die den Suchzielinformationen entsprechen; und
Ausgeben der erfassten Kennung.

## Revendications

1. Programme de traitement d'informations qui amène un ordinateur à exécuter un processus, le processus comprenant :
l'acquisition de premières données de traçabilité comportant des informations d'historique, qui comportent des détails de transaction ou des détails de traitement relatifs à un produit, et des données de contenu, qui sont une cible pour la transaction et le traitement, et devant être enregistrées dans un système de traçabilité ;
**caractérisé par** :
l'enregistrement d'un premier identifiant qui correspond aux premières données de traçabilité, d'une première valeur de hachage, qui est une information récapitulative de données individuelles de l'entreprise, et d'un identifiant précédent d'informations d'historique précédentes dans une première mémoire (13) à laquelle les organisations du système de traçabilité se réfèrent ;
l'enregistrement du premier identifiant, des informations d'historique, des informations d'accès aux données de contenu et d'une seconde valeur de hachage, qui est une information récapitulative des données de contenu, dans une deuxième mémoire (15) à laquelle certaines organisations des organisations se réfèrent ; et
dans le cas de l'acceptation d'une demande d'accès aux données gérées dans une organisation au sein d'une entreprise individuelle :
la lecture de données à partir de la première mémoire (13) ou de la deuxième mémoire (15),
la vérification de la présence ou de l'absence d'un ensemble de droits d'accès pour chaque organisation par rapport à une liste de commande d'accès prédéfinie,
le transfert des données à une organisation source de demande dans le cas où l'organisation source de demande a le droit d'accès aux données et,
le renvoi d'une erreur à l'organisation source de demande dans le cas où l'organisation source de demande n'a pas le droit d'accès aux données.

2. Programme de traitement d'informations selon la revendication 1, dans lequel le processus comprend en outre :
l'enregistrement des données de contenu dans une troisième mémoire (16) ; et
l'enregistrement d'informations qui indiquent un emplacement d'accès aux données de contenu enregistrées dans la troisième mémoire (16) dans la deuxième mémoire (15).

3. Programme de traitement d'informations selon la revendication 1, dans lequel
la deuxième mémoire (15) est référencée par certaines organisations via un registre distribué entre les certaines organisations.

4. Programme de traitement d'informations selon la revendication 1, dans lequel
les données de contenu sont des données de transaction relatives à une transaction entre les certaines organisations.

5. Programme de traitement d'informations selon la revendication 1, dans lequel le processus comprend en outre :
l'acquisition d'informations de cible de recherche ;
la recherche de données enregistrées dans la deuxième mémoire (15) sur la base des informations de cible de recherche ;
l'acquisition d'un identifiant relatif à des données qui correspondent aux informations de cible de recherche ; et l'affichage de l'identifiant acquis.

6. Procédé de traitement d'informations permettant à un ordinateur d'exécuter un processus comprenant :
l'acquisition de premières données de traçabilité comportant des informations d'historique, qui comportent des détails de transaction ou des détails de traitement relatifs à un produit, et des données de contenu, qui sont une cible pour la transaction et le traitement, et devant être enregistrées dans un système de traçabilité ;
**caractérisé par** :
l'enregistrement d'un premier identifiant qui correspond aux premières données de traçabilité, d'une première valeur de hachage, qui est une information récapitulative de données individuelles de l'entreprise, et d'un identifiant précédent d'informations d'historique précédentes dans une première mémoire (13) à laquelle les organisations du système de traçabilité se réfèrent ;
l'enregistrement du premier identifiant, des informations d'historique, des informations d'accès aux données de contenu et d'une seconde valeur de hachage, qui est une information récapitulative des données de contenu, dans une deuxième mémoire (15) à laquelle certaines organisations des organisations se réfèrent ; et
dans le cas de l'acceptation d'une demande d'accès aux données gérées dans une organisation au sein d'une entreprise individuelle :
la lecture de données à partir de la première mémoire (13) ou de la deuxième mémoire (15),
la vérification de la présence ou de l'absence d'un ensemble de droits d'accès pour chaque organisation par rapport à une liste de commande d'accès prédéfinie,
le transfert des données à une organisation source de demande dans le cas où l'organisation source de demande a le droit d'accès aux données et,
le renvoi d'une erreur à l'organisation source de demande dans le cas où l'organisation source de demande n'a pas le droit d'accès aux données.

7. Procédé de traitement d'informations selon la revendication **6,** dans lequel le processus comprend en outre :
l'enregistrement des données de contenu dans une troisième mémoire (16) ; et
l'enregistrement d'informations qui indiquent un emplacement d'accès aux données de contenu enregistrées dans la troisième mémoire (16) dans la deuxième mémoire (15).

8. Procédé de traitement d'informations selon la revendication **6,** dans lequel
la deuxième mémoire (15) est référencée par certaines organisations via un registre distribué entre les certaines organisations.

9. Procédé de traitement d'informations selon la revendication **6,** dans lequel
les données de contenu sont des données de transaction relatives à une transaction entre les certaines organisations.

10. Procédé de traitement d'informations selon la revendication **6,** dans lequel le processus comprend en outre :
l'acquisition d'informations de cible de recherche ;
la recherche de données enregistrées dans la deuxième mémoire (15) sur la base des informations de cible de recherche ;
l'acquisition d'un identifiant relatif à des données qui correspondent aux informations de cible de recherche ; et
l'affichage de l'identifiant acquis.

11. Dispositif de traitement d'informations comprenant :
une unité de commande configurée pour :
acquérir des premières données de traçabilité comportant des informations d'historique, qui comportent des détails de transaction ou des détails de traitement relatifs à un produit, et des données de contenu, qui sont une cible pour la transaction et le traitement, et devant être enregistrées dans un système de traçabilité ;
le dispositif étant **caractérisé en ce que** l'unité de commande est configurée pour :
enregistrer un premier identifiant qui correspond aux premières données de traçabilité, une première valeur de hachage, qui est une information récapitulative de données individuelles de l'entreprise, et un identifiant précédent d'informations d'historique précédentes dans une première mémoire (13) à laquelle les organisations du système de traçabilité se réfèrent ;
enregistrer le premier identifiant, les informations d'historique, les informations d'accès aux données de contenu et une seconde valeur de hachage, qui est une information récapitulative des données de contenu, dans une deuxième mémoire (15) à laquelle certaines organisations des organisations se réfèrent ; et
dans le cas de l'acceptation d'une demande d'accès aux données gérées dans une organisation au sein d'une entreprise individuelle :
lire des données à partir de la première mémoire (13) ou de la deuxième mémoire (15),
vérifier la présence ou l'absence d'un ensemble de droits d'accès pour chaque organisation par rapport à une liste de commande d'accès prédéfinie,
transférer les données à une organisation source de demande dans le cas où l'organisation source de demande a le droit d'accès aux données et,
renvoyer une erreur à l'organisation source de demande dans le cas où l'organisation source de demande n'a pas le droit d'accès aux données.

12. Dispositif de traitement d'informations selon la revendication 11, dans lequel l'unité de commande est en outre configurée pour :
enregistrer les données de contenu dans une troisième mémoire (16) ;
enregistrer des informations qui indiquent un emplacement d'accès aux données de contenu enregistrées dans la troisième mémoire (16) dans la deuxième mémoire (15).

13. Dispositif de traitement d'informations selon la revendication 11, dans lequel
la deuxième mémoire (15) est référencée par certaines organisations via un registre distribué entre les certaines organisations.

14. Dispositif de traitement d'informations selon la revendication 11, dans lequel
les données de contenu sont des données de transaction relatives à une transaction entre les certaines organisations.

15. Dispositif de traitement d'informations selon la revendication 11, dans lequel l'unité de commande est en outre configurée pour :
acquérir des informations de cible de recherche ;
rechercher des données enregistrées dans la deuxième mémoire (15) sur la base des informations de cible de recherche ;
acquérir un identifiant relatif à des données qui correspondent aux informations de cible de recherche ; et
afficher l'identifiant acquis.
